# EUROPEAN PATENT APPLICATION

(11) **EP 0 636 311 A1**
(43) Date of publication of application: **01.02.1995**
(21) Application number: 94830064.5
(22) Date of filing: 18.02.1994
(51) Int. Cl.: A01J 25/00, A01J 25/08

(54) **Apparatus for the production of ricotta**

(30) Priority: 28.07.1993 IT TO930563
(71) Applicant: S.p.A. EGIDIO ALBANI, I-20066 Melzo (Milano) (IT)
(72) Inventor: Magnanini, Francesco, I-Romprezzagno di Tornata (Cremona) (IT); Tabaglio, Enrico, I-Bozzolo (Mantova) (IT); Bonizzoni, Danilo, I-Bozzolo (Mantova) (IT)
(74) Representative: Buzzi, Franco

(57) **Abstract**

Apparatus for the production of ricotta by means of acidifying milk serum heated at a predetermined temperature, comprising a tank (1) provided with feeding and discharging means (13) of the milk serum, heating means (20) and means for the metered introduction (53, 54) of an acid substance. The tank (1) has a bottom wall (18) communicating at one end thereof (4) with an outlet hopper (23) placed below the tank (1) and to which a motor-driven extractor assembly (5) of the ricotta is operatively associated. The tank (1) is further provided with a motor-driven pushing-thickening device (36) of the ricotta within said outlet hopper (23).

## Description

### FIELD OF THE INVENTION

The present invention is related to the apparatus employed in the dairy industry for the production of ricotta by means of acidifying serum of milk, originating from cheese production processing and heated at a predetermined temperature.

More particularly, the invention is directed to such apparatus comprising a tank provided with feeding and discharging means of the milk serum, heating means and means for the metered introduction of an acid substance for obtaining the ricotta.

### STATE OF THE PRIOR ART

Traditionally, in the apparatus for the production of ricotta of the above mentioned type the steps of collection and removal of the ricotta, floating on the surface of the milk serum within the tank, are performed manually, with the intervention of a team of workers under uncomfortable environment conditions. This is essentially due to the fact that the ricotta, before being delivered to the packaging lines, must be subjected to dripping so as to reduce the liquid phase contained therein in order to achieve a titer of about 60-65%.

The handicraft production of ricotta comprises transferring of the floating ricotta, collected by means of pierced scoops, onto splints of various shapes where it is maintained until final cooling and dripping inside a cold cell.

Industrially, the ricotta is collected and loaded onto dripping cloths which in turn are folded into bags and raised in a suspended condition above the tank for the dripping of the serum.

In other known apparatus, wherein the tank has a generally conical conformation, provision is made for extracting the ricotta from below, which avoids manual discharging. However, even in this case it is necessary to proceed to a successive dripping phase, by means of suitable dripping webs or centrifugal systems.

In other apparatus known to the applicant, wherein the tank has a generally parallelepipedal conformation, the extraction of the coagulated floating material is performed by means of a finned web placed on top of the tank, which conveys the ricotta, for the reduction of the liquid phase, onto a further dripping web.

In any case, the apparatus according to the prior art require long operative time for completing the cycle of production, do not enable to obtain ricotta having a low moisture titer as it would be on the contrary desirable for a higher quality product, and generally require a huge productive labour.

### THE INVENTION

The object of the present invention is to overcome the above drawbacks, and to provide an apparatus for the production of ricotta of the type set forth at the beginning, which is able to operate in an entirely automatic cycle with shortened production time.

A further object of the invention is to suppress the dripping step, and nevertheless obtain a ricotta having a low moisture titer.

Still a further object of the invention is to provide a closed-cycle operating apparatus, which is thus totally exempt from any risks of contamination of the ricotta by the external environment, with the guarantee of obtaining a high-quality product.

According to the invention, the above objects are achieved by virtue of an apparatus of the above-mentioned type, the primary feature of which resides in that the tank has a bottom wall communicating at one end with an outlet hopper placed substantially vertically below the tank and to which a motor-driven extractor assembly of the ricotta is operatively associated, and in that the tank is further provided with a motor-driven pushing-thickening device of the ricotta into said outlet hopper.

Due to this idea of solution, the steps of collecting the ricotta and reducing the liquid phase therein are performed by virtue of the transfer of the ricotta towards said one end of the tank. The ricotta, thus thickened within the outlet hopper, is then withdrawn by the motor-driven extractor assembly following the discharge, through the bottom of the hopper itself, of the residual serum present therein. The extraction of the ricotta from the tank is therefore accomplished in a short time and in a totally automatic way, in practice without the need of any manual intervention.

According to a preferred embodiment of the invention, the pushing-thickening device comprises a vertical plate which is permeable to the milk serum and is linearly displaceable along the tank starting from the end thereof opposed to the outlet hopper.
According to another advantageous feature of the invention, the bottom of the tank is slightly sloping upwardly in the direction of the hopper and has a step in proximity thereof, whose function is to allow evacuation of the exhausted serum through the vertical plate following thickening of the ricotta.

The motor-driven extractor assembly conveniently comprises a bladed stirrer-collector coaxially rotatable within the hopper, and an extraction pump having a suction duct communicating laterally with the bottom of the hopper and in which a screw conveyor is fitted.

Conveniently, the apparatus further comprises a motor-driven ricotta breaking assembly, comprising a pair of counter-rotating swifts rotatably supported horizontally on top of the tank.

To the aim of insulating the ricotta from the outer environment, it is further advantageously provided a protection cover of the tank, through which delivery nozzles are supported for the metered introduction of the serum acidifying substance, as well as of a tank washing liquid at the end of production cycle of the ricotta.

### BRIEF DESCRIPTION OF THE DRAWINGS

The invention will now be disclosed in detail with reference to the accompanying drawings, provided purely by way of non-limiting example, wherein:
- figure 1 is a diagrammatic perspective view of an apparatus for the production of ricotta according to the invention,
- figure 2 is an enlarged and partially sectioned perspective view of the tank of the apparatus shown in figure 1,
- figure 3 is a side elevational and partially sectioned view of figure 2,
- figure 4 is a top plan and partially sectioned view of figure 2,
- figure 5 is a front elevational and partially sectioned view of figure 3,
- figure 6 shows in partial vertical section and in an enlarged scale a detail of the tank,
- figure 7 is a horizontally sectioned and enlarged scale view of another detail of the tank, and
- figure 8 is a perspective and enlarged view of a detail of figure 5.

### DETAILED DESCRIPTION OF A PREFERRED EMBODIMENT OF THE INVENTION

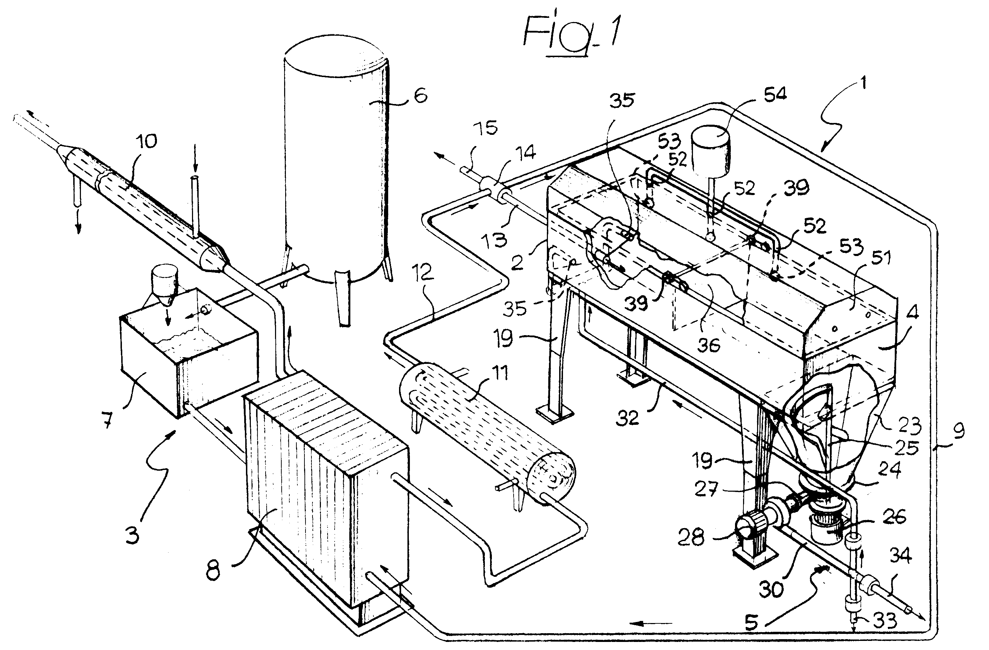

Referring initially to figure 1, the apparatus for the production of ricotta according to the invention essentially comprises a tank generally designated as l, having a substantially rectangular plan shape, connected in correspondence of one end wall 2 thereof with a feeding assembly 3 of milk serum originated from cheese processing, and connected in correspondence of its opposite end wall 4 to an extraction and discharge assembly 5.

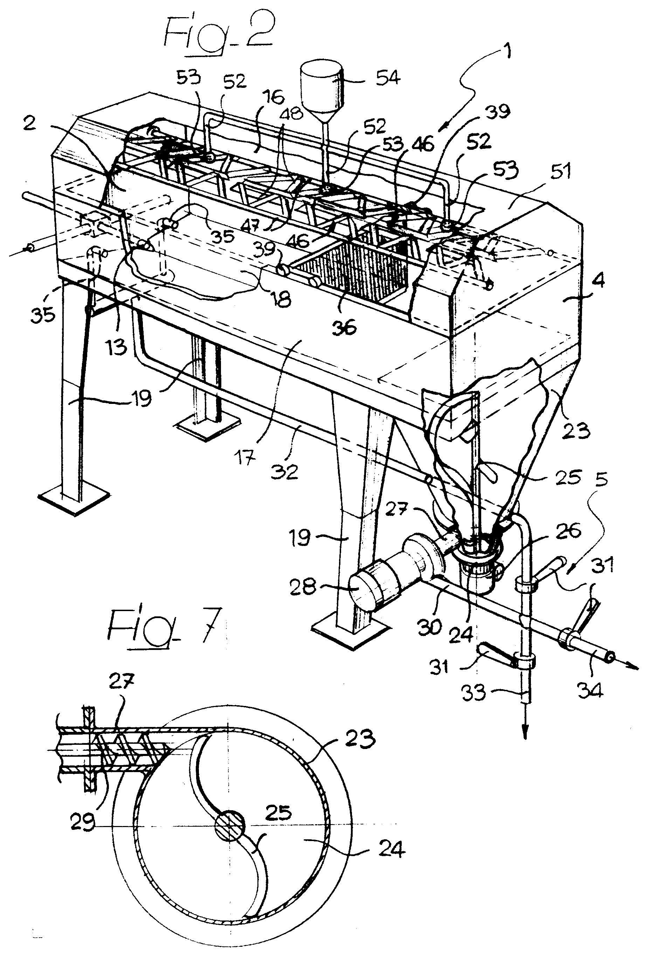

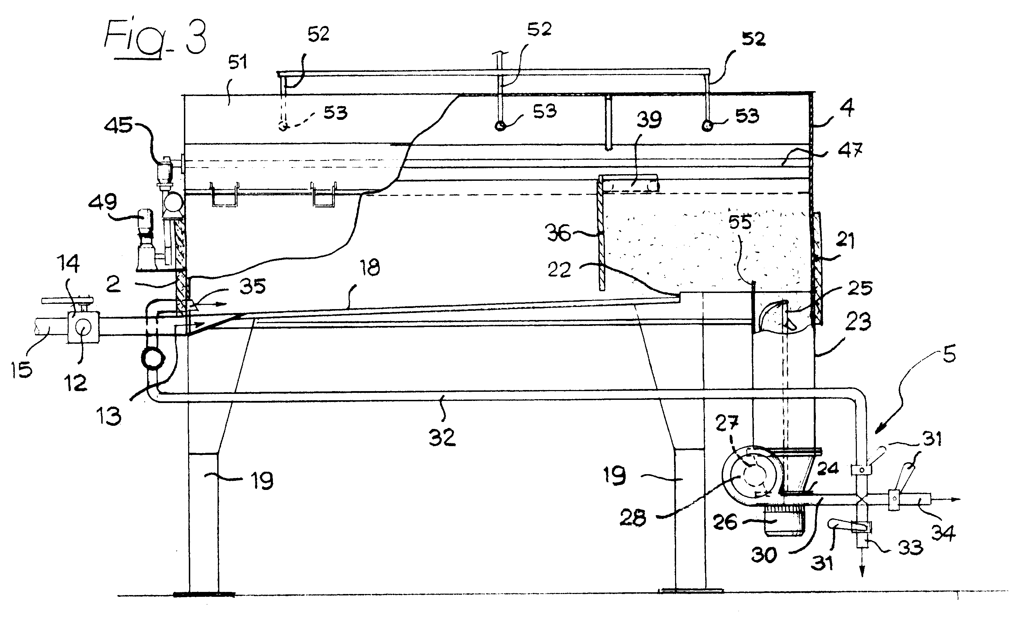

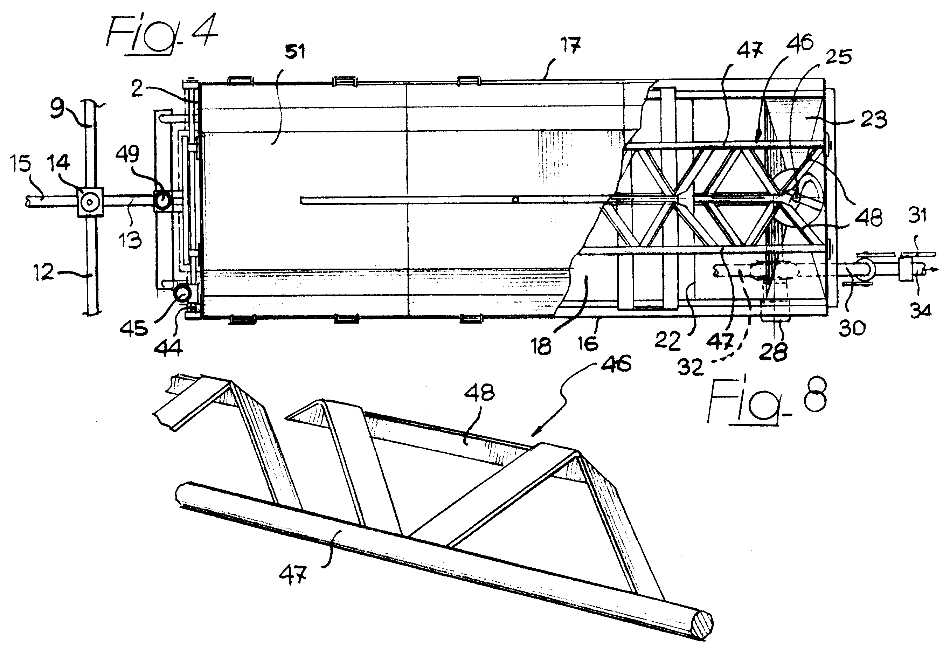

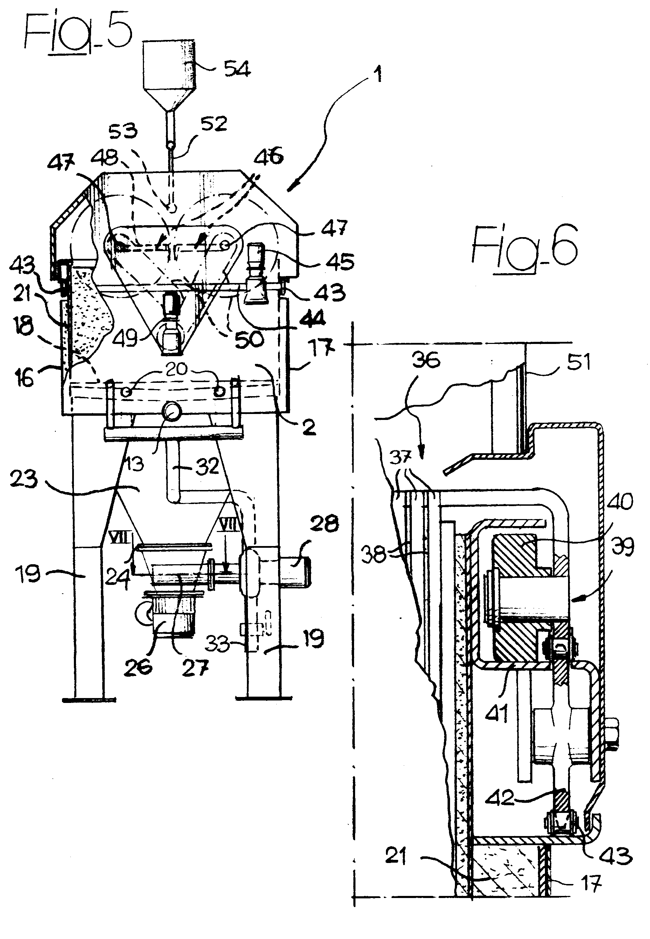

The feeding assembly 3 comprises, in a generally conventional way, a reservoir 6 of the milk serum connected, through a buffer unit 7 and a pumping unit not shown in the drawings, with the inlet of a plate heat exchanger-pasteurizing assembly 8.
The thermal exchange fluid within the heat exchanger-pasteurizing assembly 8 is conveniently the same exhausted milk serum recovered from the tank 1, at the end of each production cycle of the ricotta, through a return pipe 9. This enables increasing the temperature of the milk serum which is every time fed to the tank 1, initially at a temperature of about 80°C, and further to possibly employ the residual heat of the exhausted milk serum at the outlet of the heat exchanger-pasteurizing assembly 8 by means of a further heat exchanger 10, conveniently used for other dairy appliances.
After the first heating stage through the plate heat exchanger-pasterurizing assembly 8, the milk serum passes through a tubular heat exchanger 11, wherein the thermal exchange fluid is normally overheated water, for a second heating stage up to the pre-determined temperature of 92°C, which is to be considered as the optimum temperature in connection with the production of the ricotta, in order to achieve best quality while avoiding pre-coagula and instantaneously bringing the serum to the best conditions of denaturation of the proteins contained therein.
From the heat exchanger 11, the milk serum thus heated reaches, through an inlet pipe 12 and a duct 13, the inside of the tank 1 in correspondence of the end wall 2 thereof.
The duct 13 is employed both for inletting the milk serum inside the tank 1 at the beginning of the production cycle, and for discharging the exhausted serum at the end of the cycle. To such effect a valve assembly 14, not shown in detail but within the skill of the expert, is provided for controlling the communication between the duct 13 and the pipe 12 (inlet), between the duct 13 and the pipe 9 (outlet), and between the pipe 12 and a further pipe 15 for possibly feeding in parallel further tanks 1 (not shown in the drawings), normally being part of a plant for performing a continuous production cycle of the ricotta.
Referring now in better detail to figure 2 and to figures 3-5, the tank 1 has two larger lateral walls 16, 17 connected to the two end walls 2, 4, and a bottom wall 18 carried by a frame constituted by four substantially vertical supporting struts 19.
The bottom wall 18 has a slightly concave cross-section and, as it is clearly depicted in figure 3, is slightly sloping upwardly, relative to the horizontal, from the end wall 2 towards the opposite end wall 4. The bottom wall 18 is formed with an interspace containing tubes 20 (figure 5) for the circulation of a thermoregulation fluid, normally vapour, to the aim of maintaining the milk serum fed into the tank 1 at the optimum temperature of 92°C. Moreover, to such effect, the walls 2, 4, 16 and 17 are normally provided with respective thermally insulating linings 21.
The bottom wall 18 is formed, at a certain distance from the end wall 4, with a step-rise 22, beyond which the inside of the tank 1 is communicating with a substantially conical outlet hopper 23 extending vertically below the tank 1.
Reference 55 designates a stop member projecting within the tank 1 substantially on the prolongation of the front wall of the hopper 23.
Inside the hopper 23, the restricted bottom of which is closed by a plate 24, a bladed stirrer-collector 25, shown in better detail in figure 7, is coaxially rotatable and driven in rotation by an electric motor 26.
Above the bottom plate 24, the hopper 23 communicates with a lateral suction duct 27 of a pump 28 of the extractor assembly 5. A screw conveyor 29, driven by the same motor of the pump 28, is rotatable within the duct 27.
The delivery duct of the pump 28, indicated as 30, is connected thought a valve assembly generally indicated as 31, respectively with a re-circulation pipe 32 of the milk serum, with a discharge pipe 33 of the residual milk serum, and with an extraction pipe 34 of the ricotta.
The re-circulation pipe 32 enables inletting again, during filling of the tank 1 through the feeding duct 13, part of the milk serum in the area of the end wall 2, via inlet ducts 35.
According to a primary feature of the invention, the tank 1 is further provided with a motor-driven pushing-thickening device of the ricotta into the outlet hopper 23, which is essentially constituted by a vertical plate 36, permeable to the milk serum and linearly displaceable along the longitudinal direction of the tank 1, from the end wall 2 and, beyond the step 22 of the bottom wall 18, as far as the stop member 55.
As it is shown in better detail in figures 5 and 6, the plate 36 is preferably, but not necessarily, constituted by a plurality of adjacent vertical elements 37 having a triangular cross-section and defining therebetween narrow vertical filtering slits 38 through which the serum milk, but not the ricotta produced during operation, can flow rearwardly.
The vertical plate 36, which might alternatively be constituted by a filtering grid or the like, and which may also possibly be provided with front or rear stiffening members not shown in the drawings, is carried superiorly by a pair of trolleys 39 provided with rollers 40 having horizontal axis and movable in rolling contact along two longitudinal guides 41 fixed onto the major lateral walls 16 and 17 of the tank 1.
The two trolleys 39 are connected to respective endless chains 42 engaging respective toothed wheels 43 of which those positioned in proximity of the end wall 2 are carried by a transverse shaft 44 driven in rotation by an electric geared motor 45.
References 46 designate two counter-rotating swifts for the breakage of the ricotta, which are rotatably supported horizontally on top of the tank 1 along the longitudinal direction thereof. As it is illustrated in better detail in figure 8, each swift 46 comprises a shaft 47 rotatably supported at its ends by the walls 2, 4 of the tank 1 and carrying respective blade elements with bent outer ends 48. The two shafts 46 are driven in rotation, in correspondence of the end wall 2 of the tank 1, by an electric geared motor 49 through a pair of endless chain or belt transmissions 50 (figure 5).
Reference 51 indicates a protection cover applied in an openable way on top of the tank 1. This cover 51 is crossed by tubes 52 provided inferiorly with spherical nozzles 53 for the drop-delivery of an acidifying substance, normally lactic acid, from a metering container 54.
At the beginning of the operating cycle, the milk serum coming from the reservoir 6 is fed within the tank 1 via the duct 13, after passing through the plate heat exchanger 8 and the tubular heat exchanger 11, as previously explained. During the filling phase of the tank 1, the plate 36 is kept stationary in proximity of the end wall 2, and the extractor assembly 5 is operative only for re-circulating a portion of the serum through the pipe 32 and the ducts 35.
By means of this re-circulation and of the heating performed through the thermal-exchange fluid circulating through the pipes 20, the milk serum is thermoregulated so as to be maintained, until complete filling of the tank 1, at the optimum temperature of 92°C.
At the end of the filling operation, the metered feeding of the acidifying substance through the spherical nozzles 53 takes place, and then the recirculation of the serum through the pipe 32 is interrupted.
Thereafter, the phase of flocculation and coagulation begins, whereby the ricotta progressively goes up to the surface of the serum. During this phase the two counter-rotating swifts 46 are activated which, by means of an alternative rotary motion, carry out a "showel" action due to which breakage of the ricotta an a consequent hardening effect thereof take place. Then displacement of the plate is operated, which, by means of the trolleys 39 and the chains 43, is advanced along the tank 1 towards the step portion 22. Simultaneously, the exhausted milk serum is discharged from the tank 1 through the duct 13 and the pipe 9.
During this stage the ricotta is transferred and thickened in the direction of the hopper 23, while simultaneously the exhausted milk serum flows, below the plate 36, behind the latter. Following passing over the step 22, the flow of the exhausted serum takes place through the slits 38 of the filtering elements 37 of the plate 36.
At the end of the displacement of the plate 36, i.e. as soon as same reaches the stop member 55, the thickened mass of ricotta is thus collected above and partially within the hopper 23, in the lower part of which a certain residual amount of milk serum is still present. This residual amount is discharged to the exterior of the hopper through the duct 33, by means of the pump 28, thus allowing the ricotta to descend towards the bottom plate 24 of the hopper 23.
At the end of this phase, both the bladed stirrer 25 and the screw conveyor 29 are activated, whereby the pump 28 is permitted to discharge completely the ricotta from the hopper 23 to the extraction pipe 34.
At the end, a washing liquid is fed into the tank 1 thorough the nozzles 53, and than discharged.

All the above-disclosed operations are carried out in a totally automatic way, according to a sequential cycle piloted by means of a control electrical and/or electronic circuit, which is not disclosed in detail since within the skill of the expert.

It will be apparent from the foregoing that the apparatus according to the invention enables the cycle of production of ricotta to be carried out without the need of manual intervention, with increased rates and high quality standard of the product.

By way of example, employing a tank 1 adapted to contain 50 quintals of milk serum, the production cycle is completed in about 28' and enables to obtain about 3 quintals of ricotta having a titer comprised between 65 ad 66%, without any need of a further dripping phase.

Naturally the details of construction and the embodiments of the apparatus may be widely varied with respect to what has been disclosed and illustrated, without thereby departing from the scope of the present invention such as defined in the appended claims.

## Claims

1. Apparatus for the production of ricotta by acidifying milk serum heated at a pre-determined temperature, comprising a tank (1) provided with feeding and discharging means (13) of the milk serum, heating means (20) and means for the metered introduction (53, 54) of an acid substance, characterized in that the tank (1) has a bottom wall (18) communicating at one end (4) thereof with an outlet hopper (23) placed substantially vertically below the tank (1) and to which a motor-driven extractor assembly (5) of the ricotta is operatively associated, and in that the tank (1) is further provided with a motor-driven pushing-thickening device (36, 45) of the ricotta into said outlet hopper (23).

2. Apparatus according to claim 1, characterized in that the pushing-thickening assembly comprises a vertical plate (36) which is permeable to the milk serum and is linearly displaceable along the tank (1) starting from the end (2) thereof opposite to the outlet hopper (23).

3. Apparatus according to claim 2, characterized in that the vertical plate (36) includes a plurality of adjacent vertical filtering elements having a triangular cross-section (37).

4. Apparatus according to claim 2 or claim 3, characterized in that the vertical plate (36) is supported by a pair of upper lateral roller trolleys (39) displaceable along respective upper longitudinal guides (41) of the tank (31) by means of respective chain drive assemblies (43).

5. Apparatus according to claim 2, characterized in that the bottom (18) of the tank (1) is slightly sloping upwardly in the direction of said outlet hopper (23) and is provided in proximity thereof with a step-rise (22) followed by a stop member (55) for said vertical plate (36) of the pushing-thickening device.

6. Apparatus according to claim 1, characterized in that said motor-driven extractor assembly (5) comprises a bladed stirrer-collector (25) coaxially rotatable within the hopper (23), and an extraction pump (28) having a suction duct (27) laterally communicating with the bottom (24) of the hopper (23) and in which a screw conveyor (29) is fitted.

7. Apparatus according to claim 6, characterized in that the extraction pump (28) has a delivery duct (30) connected with a first pipe (32) for the re-circulation of the milk serum in the tank (1), with a second pipe (33) for discharging the serum from the outlet hopper (23), and with a third pipe (34) for the extraction of the ricotta, and in that it further comprises valve means (31) associated with said first, second and third pipes (32, 33, 34).

8. Apparatus according to claim 1, characterized in that it further comprises a motor-driven breaking assembly (46, 49) of the ricotta including a pair of counter-rotating shafts (46) rotatably supported horizontally on top of the tank (1).

9. Apparatus according to claim 1, characterized in that it further comprises a protection cover (51) of the tank (1) through which delivery nozzles (53) are supported for the metered introduction of the acidifying substance and for the introduction of a washing liquid into the tank (1).

10. Method for the production of ricotta by acidifying milk serum heated at a pre-determined temperature within a tank (1), characterized in that it comprises the steps of collecting and thickening at one end (4) of the tank (1) the ricotta formed on the surface of the milk serum, and of extracting below said end (4) of the tank (1) the ricotta so thickened.
